# EUROPEAN PATENT SPECIFICATION

(11) **EP 2 549 091 B1**
(45) Date of publication and mention of the grant of the patent: **17.10.2018**
(21) Application number: 11755944.3
(22) Date of filing: 05.01.2011
(51) Int. Cl.: F02M 21/02, F02D 19/06, F02D 19/02

(54) **SHUT-OFF VALVE FAULT DIAGNOSIS DEVICE**
FEHLERDIAGNOSEVORRICHTUNG FÜR EIN SPERRVENTIL
DISPOSITIF DE DIAGNOSTIC DE DEFAILLANCE DE SOUPAPE D'ARRET

(30) Priority: 18.03.2010 JP 2010062674
(43) Date of publication of application: 23.01.2013
(73) Proprietor: Keihin Corporation, Tokyo 163-0539 (JP)
(72) Inventor: SAITO, Yoshio, Shioya-gun Tochigi 329-1233 (JP); FURUSU, Tomoyuki, Shioya-gun Tochigi 329-1233 (JP)
(74) Representative: Ilgart, Jean-Christophe
(86) International application number: PCT/JP2011/050037
(87) International publication number: WO 2011/114754

(56) References cited:
- DE-A1-102007 015 783
- JP-A- 2001 193 570
- JP-A- 2003 308 868
- JP-A- 2006 147 346
- JP-A- 2008 121 446
- US-B1- 6 401 698
- US-B1- 6 467 466

## Description

### Technical Field

The present invention relates to a shut-off valve fault diagnosis device.

Priority is claimed on Japanese Patent Application No. 2010-062674, filed March 18, 2010, the content of which is incorporated herein by reference.

### Background Art

In recent years, as a technology for improving fuel efficiency and the environmental protection performance of a vehicle, introduction of a bi-fuel engine system, which selectively switches between a liquid fuel, such as gasoline, and a gaseous fuel, such as compressed natural gas (CNG) and supplies the fuels to a single engine, has progressed. Generally, in this bi-fuel engine system, in the case of using the gaseous fuel, the highly pressurized gaseous fuel that is filled in a gas tank is decompressed to a predetermined pressure by a regulator and is supplied to a fuel injection valve that is dedicated to the gaseous fuel.

An electromagnetic type shut-off valve is inserted in a fuel supply path ranging from the gas tank to the regulator, initiation and stop of the gaseous fuel supply may be switched by controlling the open and shut states of the shut-off valve using a control device. A shut-off valve fault may have a significant adverse effect on the entirety of a system, such that various technologies for diagnosing shut-off valve faults have been developed in the related art. For example, PTL 1 discloses a technology in which a shut-off valve downstream pressure at the point in time of switching the shut-off valve from a shut valve state to an open valve state, and a shut-off valve downstream pressure after passage of a predetermined time from that point in time are measured, and the fault diagnosis of the shut-off valve is performed based on a pressure rising rate obtained from both of the pressures.

### Citation List

### Patent Literature

[PTL 1] Japanese Unexamined Patent Application Publication No. 2000-282956

US 6401698 discloses a vehicle fuel gas supply system.

### Summary of Invention

### Technical Problem

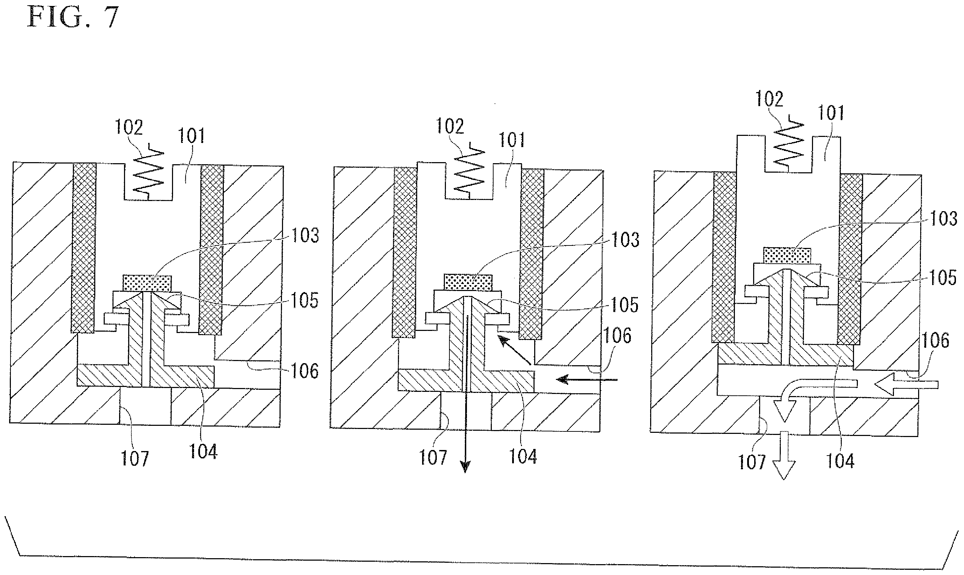

A kick pilot structure shown in FIG. 7 is known as a structure of the shut-off valve. In the shut-off valve having this kick pilot structure, while power is not supplied, a plunger 101 is pressed by a spring 102, and a pilot valve 103 that is integrally provided in the plunger 101 comes into contact with a pilot valve seat 105 that is provided in a main valve 104. That is, while power is not supplied, both of the pilot valve 103 and the main valve 104 enter a shut valve state, and thus flow of the gaseous fuel from an upstream (gas tank side) flow path 106 to a downstream (regulator side) flow path 107 is blocked (refer to FIG. 7(a)).

On the other hand, when a suction force stronger than a repulsive force of the spring 102 acts on the plunger 101 due to power supply to the shut-off valve, the pilot valve 103 becomes separated (that is opened) from the pilot valve seat 105 due to movement of the plunger 101 by the suction force, and gaseous fuel starts to flow from the upstream flow path 106 to the downstream flow path 107 (refer to FIG. 7(b)). At this point in time, since the differential pressure between the upstream flow path 106 and the downstream flow path 107 is still large, the main valve 104 is kept in a shut valve state (the movement of the plunger 101 is stopped).

In addition, after the pilot valve 103 is opened, when the differential pressure between the upstream flow path 106 and the downstream flow path 107 becomes small, the plunger 101 again initiates the movement at the point in time when the suction force due to the power supply exceeds the repulsive force. Due to the movement of this plunger 101, the main valve 104 is opened, and the gaseous fuel starts to flow from the upstream flow path 106 to the downstream flow path 107 with the maximum flow rate (refer to FIG. 7(c)). In addition, in a case in which there is no differential pressure between the upstream flow path 106 and the downstream flow path 107 before the pilot valve 103 is opened, the main valve 104 is instantly opened and thus the gaseous fuel flows to the downstream flow path 107.

Naturally, it is necessary to perform the fault diagnosis on the shut-off valve having the kick pilot structure, but it is difficult to apply the technology disclosed in PTL 1 on this fault diagnosis. This is because of the following reasons. That is, in the kick pilot structure shut-off valve, a downstream pressure of the shut-off valve increases until the main valve 104 is opened after the pilot valve 103 is opened as described above, such that like PTL 1, in the technology of diagnosing the shut-off valve fault based on the pressure raising rate, only the fault of the pilot valve 103 may be diagnosed and fault diagnosis of the main valve 104 may not be performed.

The present invention has been made in consideration of the above-described circumstances, and an object thereof is to provide a shut-off valve fault diagnosis device that is capable of appropriately performing the fault diagnosis of the shut-off valve having a so-called kick pilot structure.

### Solution to Problem

To solve the above-described problem, according to an embodiment of the present invention, there is provided a shut-off valve fault diagnosis device according to claim 1.

In response to the open and shut state of the first valve body that is opened in advance during power supply and the second valve body that is opened due to a decrease in a differential pressure between upstream and downstream after the first valve body is opened, the time-variable characteristic in the downstream pressure of the shut-off valve having the valve bodies tends to be different in each case. That is, when the open and shut state of each of the first and second valve bodies is estimated in advance from the time-variable characteristic of the downstream pressure of the shut-off valve, the fault diagnosis of the shut-off valve (a so-called shut-off valve of a kick pilot structure) may be appropriately performed from the actual measurement value of the downstream pressure based on the estimation result.

In addition, in the present invention, the diagnosis processing unit may perform the fault diagnosis of the shut-off valve from the actual measurement value of the downstream pressure based on the estimation result that is different between a case in which the actual measurement value of the downstream pressure is less than or equal to a threshold value before power supply to the shut-off valve (a first case) and a case in which the actual measurement value of the downstream pressure exceeds the threshold value (a second case).

In the first case (case in which the differential pressure between upstream and downstream of the shut-off valve is large) and the second case (case in which the differential pressure between upstream and downstream of the shut-off valve is small), a corresponding relationship between the time-variable characteristic of the downstream pressure of the shut-off valve and the open and shut state of each of the first and second valve bodies becomes different in each case. Therefore, when the fault diagnosis of the shut-off valve is performed based on the estimation result that is different between the first case and the second case, the fault diagnosis may be performed in an appropriate manner in response to the case.

In addition, in the present invention, in a case where the actual measurement value of the downstream pressure before the power supply to the shut-off valve is less than or equal to the threshold value (first case), the diagnosis processing unit may determine whether or not the actual measurement value of the downstream pressure exceeds the threshold value after a predetermined time has passed from initiation of the power supply to the shut-off valve, and in a case where it is determined that the actual measurement value does not exceed the threshold value, the diagnosis processing unit may determine that the shut-off valve is in a fault state.

In the first case, in a case where the actual measurement value of the downstream pressure does not exceed the threshold value after a predetermined time has passed from the initiation of the power supply to the shut-off valve, it is estimated that both of the first valve body and the second valve body are in a shut valve state. That is, in this case, it may be determined that the shut-off valve is in a fault state.

In addition, in the present invention, in a case where it is determined that the actual measurement value of the downstream pressure exceeds the threshold value after a predetermined time has passed from the initiation of the power supply to the shut-off valve, the diagnosis processing unit may activate a fuel injection valve provided downstream of the shut-off valve, and in a case where the actual measurement value of the downstream pressure becomes less than or equal to the threshold value after the activation of the fuel injection valve, the diagnosis processing unit may determine that the shut-off valve is in a fault state.

In the first case, in a case where the actual measurement value of the downstream pressure exceeds the threshold value after a predetermined time has passed from the initiation of the power supply to the shut-off valve, it is estimated that at least the first valve body is normally opened. Therefore, consumption of fuel downstream of the shut-off valve is attempted by activating the fuel injection valve. In a case where the actual measurement value of the downstream pressure becomes less than or equal to the threshold value after the activation of this fuel injection valve, since it is considered that fuel supply from upstream is not performed in a timely manner with respect to fuel consumption downstream of the shut-off valve, it is estimated that the second valve body is in a shut valve state. That is, in this case, it may be determined that the shut-off valve is in a fault state.

In addition, in the present invention, the predetermined time may be set to a time until the downstream pressure becomes a value at which an engine is operable after the first valve body is opened from the initiation of the power supply to the shut-off valve.

When the predetermined time is set in this manner, the fault of the shut-off valve, which becomes a cause of an open fault in the first valve body, may be detected with high accuracy.

In addition, in the present invention, in a case where the actual measurement value of the downstream pressure exceeds the threshold value before the power supply to the shut-off valve (second case), the diagnosis processing unit may activate a fuel injection valve provided downstream of the shut-off valve after the initiation of the power supply to the shut-off valve, and in a case where the actual measurement value of the downstream pressure is less than or equal to the threshold value after the activation of the fuel injection valve, the diagnosis processing unit may determine that the shut-off valve is in a fault state.

In the second case, consumption of fuel downstream of the shut-off valve is attempted by activating the fuel injection valve after the initiation of the power supply to the shut-off valve. In a case where the actual measurement value of the downstream pressure becomes less than or equal to the threshold value after the activation of this fuel injection valve, since it is considered that fuel supply from upstream is not performed in a timely manner with respect to fuel consumption downstream of the shut-off valve, it is estimated that at least the second valve body is in a shut valve state.

That is, in this case, it may be determined that the shut-off valve is in a fault state.

### Advantageous Effects of Invention

According to the present invention, a shut-off valve fault diagnosis device, which is capable of appropriately performing fault diagnosis of a shut-off valve having a so-called kick pilot structure, may be provided.

### Brief Description of Drawings

FIG. 1 is a schematic configuration diagram of a bi-fuel engine system according to an embodiment.
FIG. 2 is a block configuration diagram of a 1^{st}-ECU 5 according to this embodiment.
FIG. 3 is a block configuration diagram of a 2^{nd}-ECU 6 (a shut-off valve fault diagnosis device) of this embodiment.
FIG. 4 is a diagram illustrating a relationship obtained by estimating the open and shut states of a pilot valve 103 and a main valve 104 from a time-variable characteristic in a downstream pressure P of the shut-off valve 41 in a first case.
FIG. 5 is a diagram illustrating a relationship obtained by estimating the open and shut state of the pilot valve 103 and the main valve 104 from the time-variable characteristic in the downstream pressure P of the shut-off valve 41 in a second case.
FIG. 6 is a flowchart illustrating a shut-off valve fault diagnosis process that is performed by a CPU 66 so as to realize a shut-off valve fault diagnosis function.
FIG. 7 is an internal configuration example of a shut-off valve having a kick pilot structure.

### Description of Embodiments

Hereinafter, an embodiment of the present invention will be described with reference to the attached drawings. In addition, in the following description, as a shut-off valve fault device relating to the present invention, an ECU (Electronic Control Unit), which is used in a bi-fuel engine system that selectively switches between a liquid fuel, such as gasoline, and a gaseous fuel, such as compressed natural gas (CNG), and supplies it to a single engine, will be described as an example.

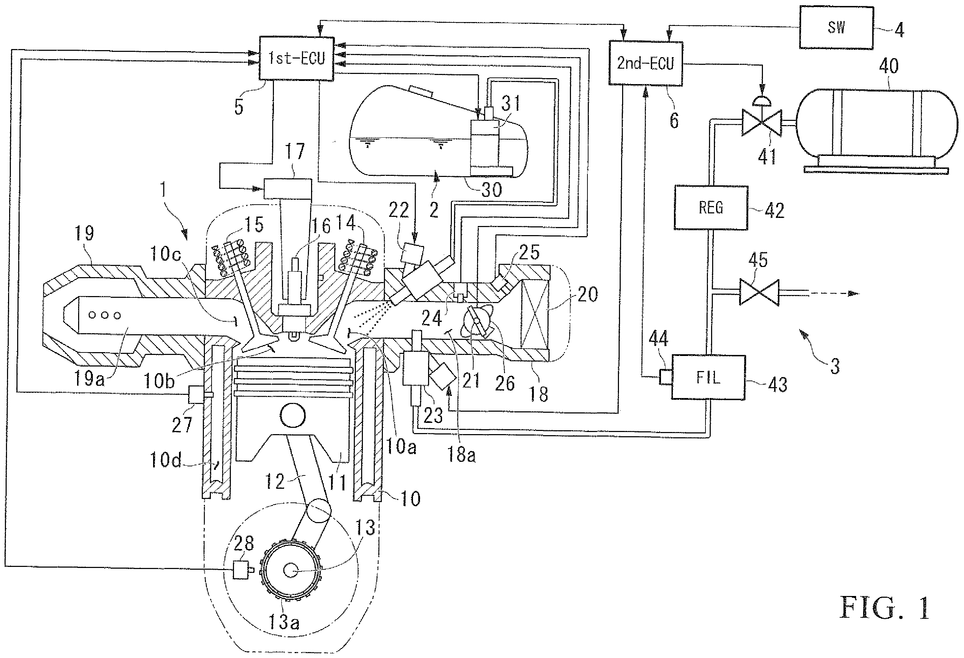

FIG. 1 is a schematic configuration diagram of a bi-fuel engine system according to an embodiment. As shown in FIG. 1, the bi-fuel engine system in this embodiment is schematically configured by an engine 1, a liquid fuel supply unit 2, a gaseous fuel supply unit 3, a fuel-switching switch 4, 1^{st}-ECU 5, and a 2^{nd}-ECU 6 (shut-off valve fault diagnosis device).

The engine 1 is a four-cycle engine that may selectively use a liquid fuel and a gaseous fuel, and includes a cylinder 10, a piston 11, a connecting rod 12, a crankshaft 13, an intake valve 14, an exhaust valve 15, an ignition plug 16, an ignition coil 17, an intake pipe 18, an exhaust pipe 19, an air cleaner 20, a throttle valve 21, a liquid fuel injection valve 22, a gaseous fuel injection valve 23, an intake air pressure sensor 24, an intake air temperature sensor 25, a throttle opening degree sensor 26, a cooling water temperature sensor 27, and a crank angle sensor 28.

The cylinder 10 is a hollow cylindrical member that is used to make the piston 11, which is provided at the inside of the cylinder 10, undergo a reciprocating motion by repeating four strokes including intake, compression, combustion (i.e., expansion), and exhaust. The cylinder 10 includes an intake port 10a, a combustion chamber 10b, and an exhaust port 10c. The intake port 10a is a flow path that is used to supply mixed gas of air and fuel to the combustion chamber 10b. The combustion chamber 10b is a space that is used to store the above-described mixed gas and to cause the mixed gas that has been compressed in the compression stroke to be combusted in the combustion stroke. The exhaust port 10c is a flow path that is used to discharge exhaust gas from the combustion chamber 10b to the outside in the exhaust stroke. A water cooling path 10d that is used to circulate cooling water is provided in an outer wall of the cylinder 10.

The crankshaft 13, which is used to convert the reciprocating motion of the piston 11 into rotational motion, is connected to the piston 11 via the connecting rod 12. The crankshaft 13 extends in a direction orthogonal to the reciprocation direction of the piston 11 and is connected to a flywheel (not shown), a mission gear, and the like. A rotor 13a, which is used to detect a crank angle, is co-axially connected to the crankshaft 13. A plurality of protrusions are provided at an outer circumference of the rotor 13a in such a manner that the rear end of each of the protrusions is spaced with an equal angular interval (for example, at an interval of 20°) with respect to a rotational direction.

The intake valve 14 is a valve member that is used to open and shut an aperture portion on the combustion chamber 10b side of the air intake port 10a and is connected to a camshaft (not shown). The intake valve 14 is driven to open and shut in response to the respective strokes by this camshaft.

The exhaust valve 15 is a valve member that is used to open and shut an aperture portion of the air exhaust port 10c on the combustion chamber 10b side and is connected to a camshaft (not shown). The exhaust valve 15 is driven to open and shut in response to the strokes by this camshaft.

The ignition plug 16 is provided at an upper portion of the combustion chamber 10b in such a manner that electrodes are exposed to the inside of the combustion chamber 10b and generates a spark between the electrodes by a high-voltage signal that is supplied from the ignition coil 17.

The ignition coil 17 is a transformer that is formed by a primary coil and a secondary coil. The ignition coil 17 boosts an ignition voltage signal that is supplied from the 1^{st}-ECU 5 to the primary coil and supplies the ignition voltage signal from the secondary coil to the ignition plug 16.

The intake pipe 18 is an air supply pipe and is connected to the cylinder 10 in such a manner that an intake flow path 18a provided inside the intake pipe 18 communicates with the intake port 10a.

The exhaust pipe 19 is a pipe that discharges exhaust gas and is connected to the cylinder 10 in such a manner that an exhaust flow path 19a inside the exhaust pipe communicates with the exhaust port 10c.

The air cleaner 20 is provided upstream of the intake pipe 18, purifies air taken in from the outside and supplies the purified air to the intake flow path 18a.

The throttle valve 21 is provided inside the intake flow path 18a and rotates in response to throttle manipulation (or accelerator manipulation). That is, a cross-sectional area of the intake flow path 18a varies by the rotational motion of the throttle valve 21, and the air intake quantity accordingly varies.

The liquid fuel injection valve 22 is an electromagnetic valve (for example, a solenoid valve or the like) that is provided in the intake pipe 18 in such a manner that an injection port is exposed to the intake port 10a. The liquid fuel injection valve 22 injects the liquid fuel (gasoline or the like), which is supplied from the liquid fuel supply unit 2, from the injection port in response to a fuel injection valve driving signal supplied from the 1^{st}-ECU 5.

The gaseous fuel injection valve 23 is an electromagnetic valve (for example, a solenoid valve or the like) that is provided in the intake pipe 18 in such a manner that an injection port is exposed to the intake port 10a. The gaseous fuel injection valve 23 injects the gaseous fuel (CNG or the like), which is supplied from the gaseous fuel supply unit 3, from the injection port in response to a fuel injection valve driving signal supplied from the 2^{nd}-ECU 6.

The intake air pressure sensor 24 is a semiconductor pressure sensor that uses, for example, a piezoresistive effect. The intake air pressure sensor 24 is provided in the intake pipe 18 in such a manner that a sensitive surface thereof is exposed to the intake flow path 18a downstream of the throttle valve 21 and outputs an intake air pressure signal corresponding to the intake air pressure inside the intake pipe 18 to the 1^{st}-ECU 5.

The intake air temperature sensor 25 is provided in the intake pipe 18 in such a manner that a sensitive portion thereof is exposed to the intake flow path 18a upstream of the throttle valve 21 and outputs the intake air temperature signal corresponding to the intake air temperature inside the intake pipe 18 to the 1^{st}-ECU 5.

The throttle opening degree sensor 26 outputs a throttle opening degree signal corresponding to the opening degree of the throttle valve 21 to the 1^{st}-ECU 5.

The cooling water temperature sensor 27 is provided in the cylinder 10 in such a manner that a sensitive portion of the cooling water temperature sensor 27 is exposed to the cooling water path 10d of the cylinder 10 and outputs a cooling water temperature signal corresponding to the temperature of the cooling water that flows through the cooling water path 10d to the 1^{st}-ECU 5.

For example, the crank angle sensor 28 is an electromagnetic type pickup sensor. The crank angle sensor 28 outputs a pair of pulse signals having polarities different from each other to the 1^{st}-ECU 5 whenever each of the protrusions provided at the outer circumference of the rotor 13a passes the vicinity of the sensor 28. More specifically, the crank angle sensor 28 outputs a pulse signal having a negative polarity amplitude when the front end of each of the protrusions goes past in the rotation direction, and outputs a pulse signal having a positive polarity amplitude when the rear end of each of the protrusions goes past in the rotation direction.

The liquid fuel supply unit 2 includes a liquid fuel tank 30 and a fuel pump 31.

The liquid fuel tank 30 is a vessel in which liquid fuel, such as gasoline fuel or alcohol fuel, is stored.

The fuel pump 31 pumps the liquid fuel out of the liquid fuel tank 30 and pumps out the liquid fuel to a fuel inlet of the liquid fuel injection valve 22 in response to a pump driving signal supplied from the 1^{st}-ECU 5.

The gaseous fuel supply unit 3 includes a gaseous fuel tank 40, a shut-off valve 41, a regulator 42, a filter 43, a fuel pressure sensor 44, and a relief valve 45.

For example, the gaseous fuel tank 40 is a pressure resistant vessel in which highly pressurized gaseous fuel such as CNG is filled. The shut-off valve 41 is a shut-off valve that has a kick pilot structure and that is interposed in a fuel supply path ranging from the gaseous fuel tank 40 to the regulator 42. The shut-off valve 41 switches initiation and stop of gaseous fuel supply from the gaseous fuel tank 40 by performing a valve opening operation and a valve shutting operation in response to a shut-off valve driving signal that is supplied from the 2^{nd}-ECU 6. In addition, as described with reference to FIG. 7, the shut-off valve 41 having this kick pilot structure includes a pilot valve 103 (first valve body) that is opened in advance during power supply and a main valve 104 (second valve body) that is opened due to a decrease in the differential pressure between upstream and downstream after the opening.

The regulator 42 is a pressure regulating valve that is disposed downstream of the shut-off valve 41. The regulator 42 decompresses the high-pressure gaseous fuel that is supplied from the gaseous fuel tank 40 at the time of opening the shut-off valve 41 to a desired pressure, and then delivers the decompressed gaseous fuel to the filter 43 that is provided at a downstream side.

The filter 43 removes foreign materials (for example, foreign materials such as compressor oil in the gaseous fuel) contained in the gaseous fuel delivered from the regulator 42, and delivers the gaseous fuel from which the foreign materials are removed to a fuel inlet of the gaseous fuel injection valve 23.

The fuel pressure sensor 44 is a pressure sensor that is provided in the filter 43. The fuel pressure sensor 44 detects a pressure of the gaseous fuel that is delivered to the gaseous fuel injection valve 23 and outputs a pressure detection signal representing the detection result to the 2^{nd}-ECU 6.

The relief valve 45 is a safety valve that is interposed in a divergence pipe that communicates with a pipe connecting the regulator 42 and the filter 43. In a case where the fuel pressure downstream of the regulator 42 exceeds a pressure that is set, the relief valve 45 is opened to discharge (relieve) the gaseous fuel to the outside.

The fuel-switching switch 4 is a switch to realize fuel-switching by manual operation. The fuel-switching switch 4 outputs a fuel designation signal representing a state of the switch, that is, whether either the liquid fuel or the gaseous fuel is designated as fuel that is used in the engine 1 to the 2^{nd}-ECU 6.

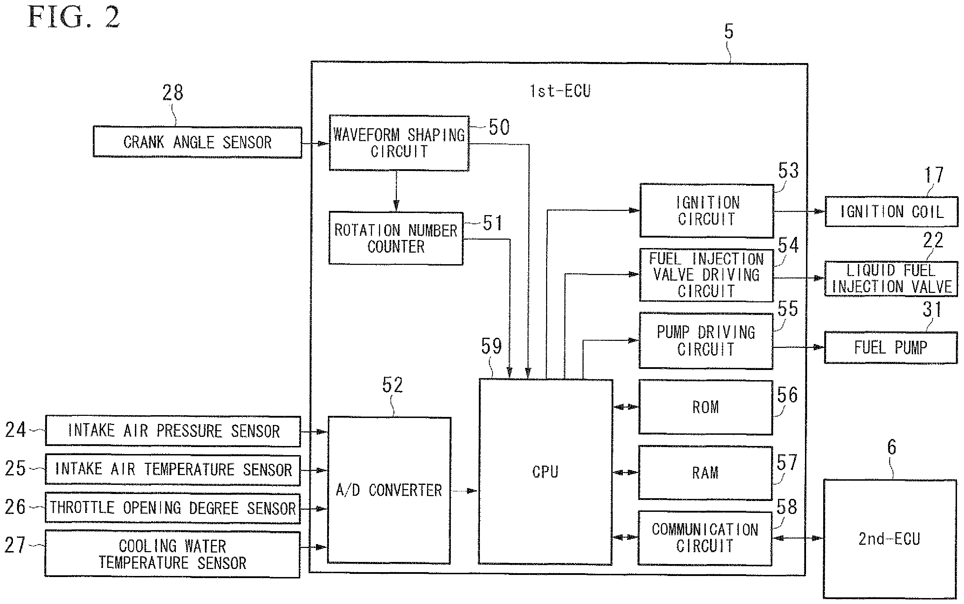

The 1^{st}-ECU 5 mainly performs operation control of the engine 1 that uses the liquid fuel. As shown in FIG. 2, the 1^{st}-ECU 5 includes a waveform shaping circuit 50, a rotation number counter 51, an A/D converter 52, an ignition circuit 53, a fuel injection valve driving circuit 54, a pump driving circuit 55, a ROM (Read Only Memory) 56, a RAM (Random Access Memory) 57, a communication circuit 58, and a CPU (Central Processing Unit) 59.

The waveform shaping circuit 50 performs waveform shaping to change a crank signal that is input from the crank angle sensor 28 into a square-wave pulse signal (for example, to change a negative polarity crank signal into a high level signal, and change a positive polarity crank signal in a ground level into a low level signal), and outputs the waveform-shaped signal to the rotation number counter 51 and the CPU 59. That is, this square-wave pulse signal is a square-wave pulse signal whose cycle is the length of time that is taken for the crankshaft 13 to rotate 20°. In the following description, the square-wave pulse signal that is output from the waveform shaping circuit 50 is referred to as a crank pulse signal.

The rotation number counter 51 calculates the engine rotation number based on the crank pulse signal that is input from the above-described waveform shaping circuit 50, and outputs the calculation result to the CPU 59.

The A/D converter 52 converts an intake air pressure signal that is input from the intake air pressure sensor 24, an intake air temperature signal that is input from the intake air temperature sensor 25, a throttle opening degree signal that is input from the throttle opening degree sensor 26, and a cooling water temperature signal that is input from the cooling water temperature sensor 27 into a digital signal (a value of the intake air pressure, a value of the intake air temperature, a value of the throttle opening degree, and a value of the cooling water temperature), and then outputs this digital signal to the CPU 59.

The ignition circuit 53 includes a capacitor that accumulates power supply voltage that is supplied from a battery (not shown) and discharges electric charges that have been accumulated in the capacitor to a primary coil of the ignition coil 17 as an ignition voltage signal in accordance with the request from the CPU 59.

The fuel injection valve driving circuit 54 generates a fuel injection valve driving signal in accordance with the request from the CPU 59 and outputs this fuel injection valve driving signal to the liquid fuel injection valve 22.

The pump driving circuit 55 generates a pump driving signal in accordance with the request from the CPU 59, and outputs the pump driving signal to the fuel pump 31.

The ROM 56 is a non-volatile memory in which an engine control program to realize various functions of the CPU 59 and various types of setting data are stored in advance. The RAM 57 is a volatile working memory that is used to temporarily hold data when the CPU 59 causes the engine control program to execute various operations. The communication circuit 58 is a communication interface that realizes a data communication between the 1^{st}-ECU 5 and the 2^{nd}-ECU 6 under the control of the CPU 59, and is connected to the 2^{nd}-ECU 6 via a communication cable.

The CPU 59 performs operation control of the engine 1 by the liquid fuel in accordance with the engine control program that is stored in the ROM 56 based on the crank pulse signal that is input from the waveform shaping circuit 50, the engine rotation number that may be obtained from the rotation number counter 51, a value of the intake air pressure, a value of the intake air temperature, a value of the throttle opening degree, and a value of the cooling water temperature, which may be obtained from the A/D converter 52, and various kinds of information that may be obtained from the 2^{nd}-ECU 6 via the communication circuit 58.

Specifically, the CPU 59 monitors a rotational state of the crankshaft 13 (in other words, a position of the piston 11 in the cylinder 10) based on the crank pulse signal that is input from the waveform shaping circuit 50, and outputs an ignition control signal to the ignition circuit 53 at the point in time at which the piston 11 reaches a position corresponding to an ignition time to cause the ignition plug 16 to spark.

When receiving an instruction of operation by using the liquid fuel from the 2^{nd}-ECU 6 via the communication circuit 58, the CPU 59 outputs a fuel supply control signal to the pump driving circuit 55 so as to drive the fuel pump 31 and initiates supply of the liquid fuel to the liquid fuel injection valve 22. In addition, the CPU 59 outputs the fuel injection control signal to the fuel injection valve driving circuit 54 at the point in time at which the piston 11 reaches a position corresponding to a fuel injection time so as to perform injection of the liquid fuel by the liquid fuel injection valve 22. In addition, the CPU 59 also has a function of transmitting the position of the piston 11, the engine rotation number, the value of the intake air pressure, the value of the intake air temperature, the value of the throttle valve opening degree, and the value of the cooling water temperature, which the CPU 59 itself recognize, to the 2^{nd}-ECU 6 via the communication circuit 58.

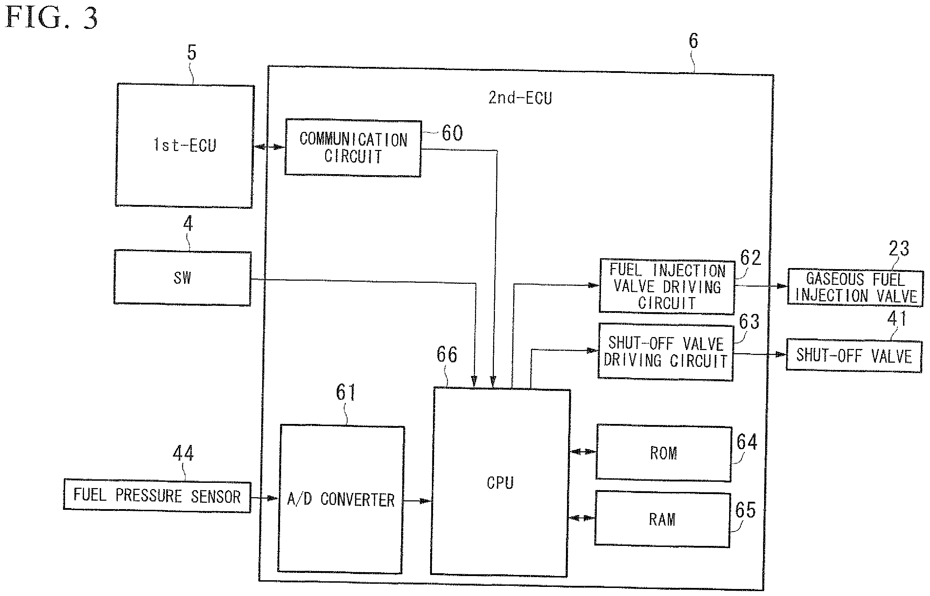

The 2^{nd}-ECU 6 performs operation control of the engine 1 that mainly uses the gaseous fuel. As shown in FIG. 3, the 2^{nd}-ECU 6 includes a communication circuit 60, an A/D converter 61, a fuel injection valve driving circuit 62, a shut-off valve driving circuit 63, a ROM 64, a RAM 65, and a CPU 66.

The communication circuit 60 is a communication interface that realizes a data communication between the 1^{st}-ECU 5 and the 2^{nd}-ECU 6 under the control of the CPU 66 and is connected to the 1^{st}-ECU 5 (more specifically, the communication circuit 58) via a communication cable. The A/D converter 61 converts a pressure detection signal that is input from the fuel pressure sensor 44 into a digital signal and outputs this converted signal to the CPU 66. In addition, since the digital signal is a signal representing an actual measurement value of the pressure downstream of the shut-off valve 41, hereinafter, the digital signal is referred to as a downstream pressure actual measurement value.

The fuel injection valve driving circuit 62 generates a fuel injection valve driving signal in accordance with the request from the CPU 66 and outputs this fuel injection valve driving signal to the gaseous fuel injection valve 23. The shut-off valve driving circuit 63 generates a shut-off valve driving signal in accordance with the request from the CPU 66 and outputs this shut-off valve driving signal to the shut-off valve 41. The ROM 64 is a non-volatile memory in which an engine control program to realize various functions of the CPU 66 and various types of setting data are stored in advance. The RAM 65 is a volatile working memory that is used to temporarily hold data when the CPU 66 causes the engine control program to execute various operations.

The CPU 66 (diagnosis processing unit) performs operation control of the engine 1 by the gaseous fuel in accordance with the engine control program that is stored in the ROM 64 based on the fuel designation signal that is input from the fuel-switching switch 4, the position of the piston 11, the engine rotation number, the value of the intake air pressure, the value of the intake air temperature, the value of the throttle opening degree, and the value of the cooling water, which may be obtained from the 1^{st}-ECU 5 via the communication circuit 60, and the downstream pressure actual measurement value that may be obtained from the A/D converter 61.

Specifically, in a case where it is determined that the liquid fuel is designated as the fuel that is used in the engine 1 from an analysis result of the fuel designation signal that is input from the fuel-switching switch 4, the CPU 66 transmits an instruction of operation by using the liquid fuel to the 1^{st}-ECU 5 (more specifically, the communication circuit 58) via the communication circuit 60.

On the other hand, in a case where it is determined that the gaseous fuel is designated as the fuel that is used in the engine 1 from the analysis result of the fuel designation signal that is input from the fuel-switching switch 4, the CPU 66 makes a request of generating a shut-off valve driving signal for the shut-off valve driving circuit 63. Due to this, the shut-off valve driving signal is supplied from the shut-off valve driving circuit 63 to the shut-off valve 41 (that is, power supply of the shut-off valve 41 begins to start), the shut-off valve 41 enters an open state, and supply of the gaseous fuel from the gaseous fuel tank 40 to the gaseous fuel injection valve 23 begins to start. In addition, the CPU 66 makes a request of generating a fuel injection valve driving signal for the fuel injection valve driving circuit 62 at the point in time at which the piston 11 reaches a position corresponding to a fuel injection time so as to perform injection of the gaseous fuel by the gaseous fuel injection valve 23.

Furthermore, as a characteristic function in this embodiment, the CPU 66 has a shut-off valve fault diagnosis function of estimating the open and shut states of each of the pilot valve 103 and the main valve 104 from a time-variable characteristic in a downstream pressure of the shut-off valve 41, and of performing the fault diagnosis of the shut-off valve 41 from an actual measurement value of the downstream pressure that may be obtained from the A/D converter 61 based on the estimation result. Hereinafter, the shut-off valve fault diagnosis function which the CPU 66 has will be described in detail.

First, a fault diagnosis principle of the shut-off valve 41 in this embodiment is as follows. Specifically, the time-variable characteristic of the downstream pressure of the shut-off valve 41 including the pilot valve 103 and the main valve 104 tends to vary depending on the open and shut states of each of the pilot valve 103 that is opened in advance during power supply to the shut-off valve 41 and the main valve 104 that is opened due to a decrease in the differential pressure between upstream and downstream after the opening. Therefore, in a case where estimation of the open and shut state of each of the pilot valve 103 and the main valve 104 is made in advance from the time-variable characteristic of the downstream pressure of the shut-off valve 41, the fault diagnosis of the shut-off valve 41 having the kick pilot structure may be appropriately performed from the downstream pressure actual measurement value based on the estimation result.

In addition, the estimation result of the time-variable characteristic of the downstream pressure of the shut-off valve 41 and the open and shut state of each of the pilot valve 103 and the main valve 104 is different between a case in which the downstream pressure actual measurement value is less than or equal to the threshold value before the power supply to the shut-off valve 41 (first case: a case in which the differential pressure between upstream and downstream of the shut-off valve 41 is large) and a case in which the downstream pressure actual measurement value exceeds the threshold value (second case: a case in which the differential pressure between upstream and downstream of the shut-off valve 41 is small). Here, a solid difference due to manufacturing or deterioration with the passage of time is present in the fuel pressure sensor 44, such that an error in a detection value with respect to the actual pressure variation occurs. Therefore, a threshold value Pt is set in advance so that correct determination may be performed even when the maximum error in the detection value of the pressure is anticipated in any one of the first case and the second case. It is preferable that the threshold value Pt be set to a value at which it enters a supply shortage state when the gaseous fuel pressure is less than or equal to the threshold value Pt. Therefore, when the fault diagnosis of the shut-off valve 41 is performed based on the estimation result that is different in each of the first case and the second case, appropriate fault diagnosis in correspondence with each case may be performed.

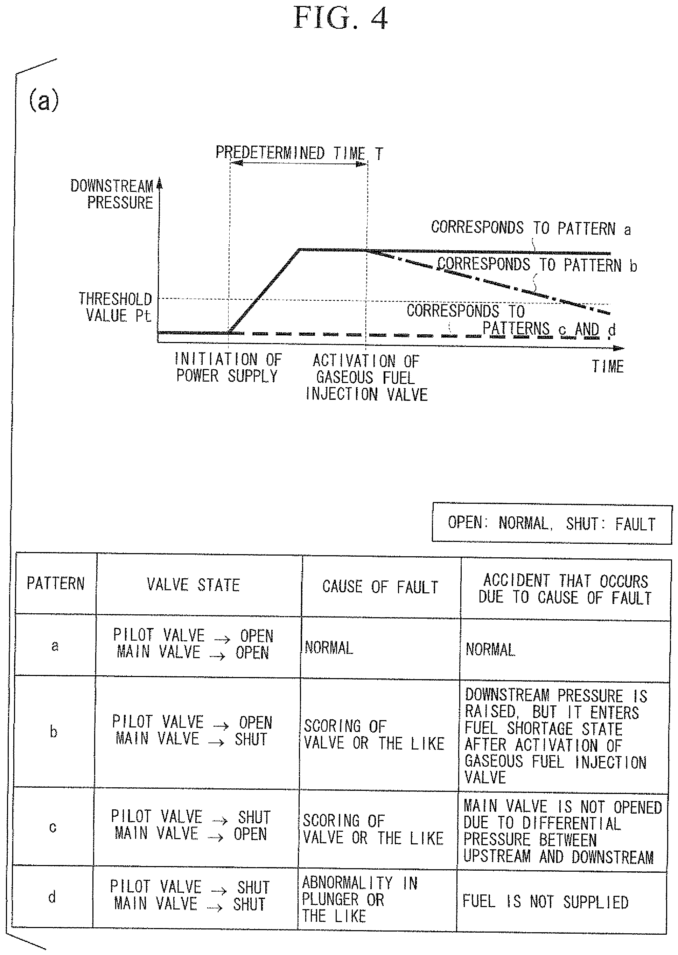

FIG. 4 shows a relationship obtained by estimating the open and shut states of the pilot valve 103 and the main valve 104 from a time-variable characteristic in a downstream pressure P of the shut-off valve 41 in a first case. FIG. 4(a) shows each tendency of the time-variable characteristic of the downstream pressure P, and FIG. 4(b) shows the open and shut states (valve state) of the pilot valve 103 and the main valve 104 that correspond to each tendency. In addition, in FIG. 4(b), an open valve state represents that a valve is in a normal state, and a shut valve state represents that the valve is in a fault state.

As shown in FIG. 4(a), in regard to the first case, in a case where the downstream pressure P does not exceed the threshold value Pt after a predetermined time T has passed from the initiation of the power supply to the shut-off valve 41 (refer to a broken line portion), as shown in FIG. 4(b), it is estimated that both of the pilot valve 103 and the main valve 104 enter a shut valve state (refer to pattern d), or the pilot valve 103 enters a shut valve state and the main valve 104 enters an open valve state (refer to pattern c). That is, in this case, it may be determined that the shut-off valve 41 is in a fault state.

In addition, as shown in FIG. 4(a), in a case where the downstream pressure P exceeds the threshold value Pt after a predetermined time T has passed from the initiation of the power supply to the shut-off valve 41, it is estimated that at least the pilot valve 103 is normally opened. Therefore, consumption of fuel downstream of the shut-off valve 41 is attempted by activating the gaseous fuel injection valve 23. After the activation of the gaseous fuel injection valve 23, as shown in FIG. 4(a), in a case where the downstream pressure P is less than or equal to the threshold value Pt (refer to an one-dot chain line portion), since it is considered that fuel supply from upstream is not performed in a timely manner with respect to fuel consumption downstream of the shut-off valve 41, as shown in FIG. 4(b), it is estimated that the main valve 104 is in a shut valve state (refer to pattern b).

That is, also in this case, it may be determined that the shut-off valve 41 is in a fault state.

Furthermore, as shown in FIG. 4(a), in a case where the downstream pressure P is not less than or equal to the threshold value Pt after the activation of the gaseous fuel injection valve 23 (refer to a solid line portion), since it is considered that fuel supply from upstream is timely performed with respect to fuel consumption downstream of the shut-off valve 41, as shown in FIG. 4(b), it is estimated that the main valve 104 is also in an open valve state (refer to pattern a). That is, in this case, it may be determined that the shut-off valve 41 is in a normal state.

In addition, in the above-described first case, it is preferable that the predetermined time T be set to a time until the downstream pressure P becomes a value at which an engine is operable after the pilot valve 103 is opened from the initiation of the power supply to the shut-off valve 41. When the predetermined time T is set in this manner, the fault of the shut-off valve 41, which becomes a cause of an open fault in the pilot valve 103, may be detected with high accuracy.

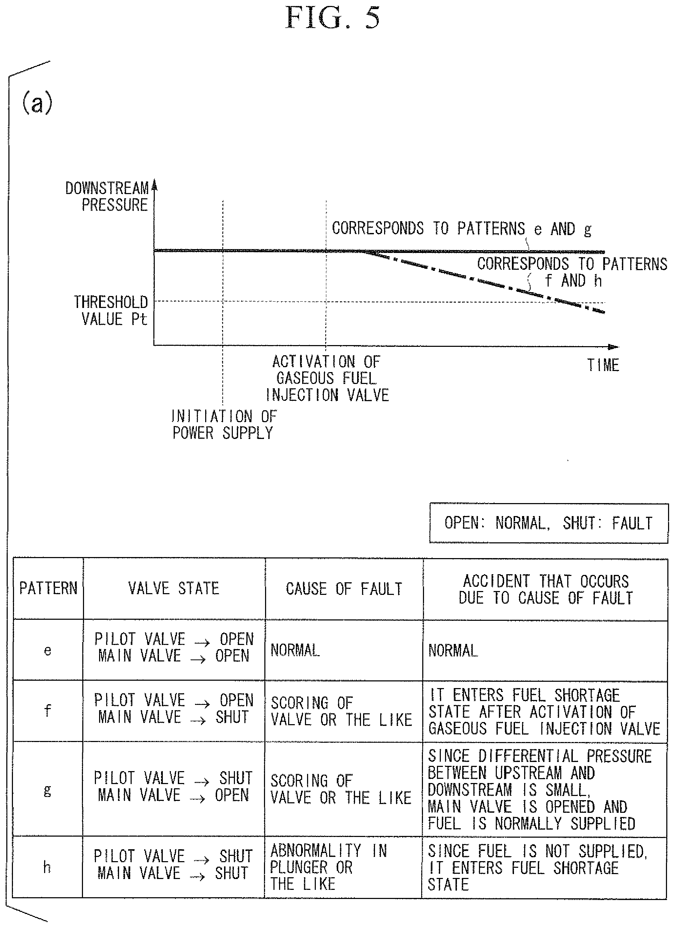

FIG. 5 shows a relationship obtained by estimating the open and shut states of the pilot valve 103 and the main valve 104 from a time-variable characteristic in a downstream pressure P of the shut-off valve 41 in a second case. FIG. 5(a) shows each tendency of the time-variable characteristic of the downstream pressure P, and FIG. 5(b) shows the open and shut states (valve state) of the pilot valve 103 and the main valve 104, which correspond to tendencies. In addition, in FIG. 5(b), an open valve state represents that a valve is in a normal state, and a shut valve state represents that the valve is in a fault state.

As shown in FIG. 5(a), in the second case, consumption of fuel downstream of the shut-off valve 41 is attempted by activating the gaseous fuel injection valve 23 after the initiation of the power supply to the shut-off valve 41. After the activation of the gaseous fuel injection valve 23, as shown in FIG. 5(a), in a case where the downstream pressure P is less than or equal to the threshold value Pt (refer to a two-dot chain line portion), since it is considered that fuel supply from upstream is not performed in a timely manner with respect to fuel consumption downstream of the shut-off valve 41, as shown in FIG. 5(b), it is estimated that at least the main valve 104 is in a shut valve state (refer to patterns f and h). That is, also in this case, it may be determined that the shut-off valve 41 is in a fault state.

Furthermore, as shown in FIG. 5(a), in a case where the downstream pressure P is not less than or equal to the threshold value Pt after the activation of the gaseous fuel injection valve 23 (refer to a solid line portion), since it is considered that fuel supply from upstream is timely performed with respect to fuel consumption downstream of the shut-off valve 41, as shown in FIG. 5(b), it is estimated that at least the main valve 104 is in an open valve state (refer to patterns e and g). That is, in this case, it may be determined that the shut-off valve 41 is in a normal state.

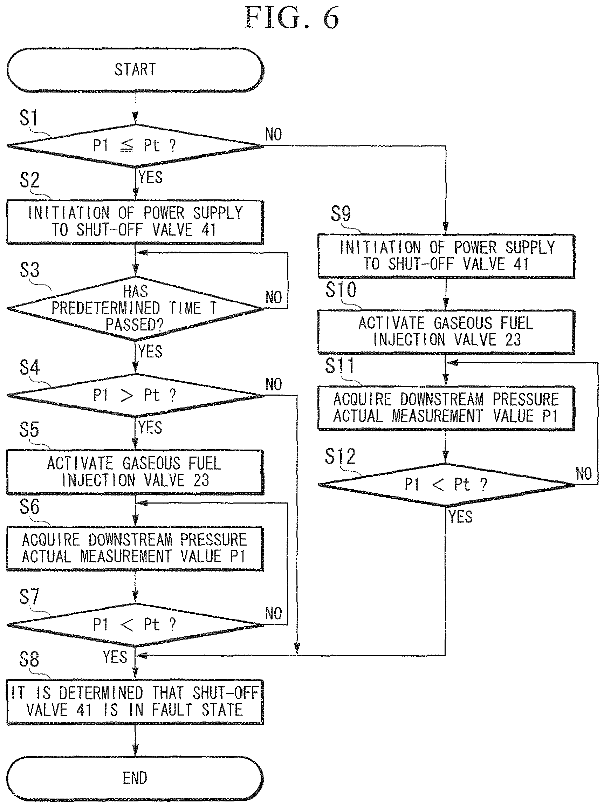

Based on the fault diagnosis principle of the shut-off valve 41 in this embodiment as described above, hereinafter, a shut-off valve fault diagnosis process that is performed by the CPU 66 to realize the shut-off valve fault diagnosis function will be described with reference to a flowchart of FIG. 6.

As shown in FIG. 6, after initiation of the shut-off valve fault diagnosis process, first, the CPU 66 determines whether or not the downstream pressure actual measurement value P1 that is obtained from the A/D converter 61 before the power supply of the shut-off valve 41 is less than or equal to the threshold value Pt (step S1). In the case of "Yes" in step S1, that is, in the first case shown in FIG. 4, the CPU 66 makes a request of generating the shut-off valve driving signal for the shut-off valve driving circuit 63 to initiate the power supply of the shut-off valve 41 (step S2).

In addition, the CPU 66 determines whether or not a predetermined time T has passed (step S3). Here, in the case of "Yes", that is, the predetermined time T has passed, the CPU 66 determines whether or not the downstream pressure actual measurement value PI, which is obtained from the A/D converter 61 after the passage of the predetermined time T, exceeds the threshold value Pt (step S4).

In the case of "Yes" in step S4, that is, the downstream pressure actual measurement value P1 exceeds the threshold value Pt after the passage of the predetermined time T from the initiation of the power supply to the shut-off valve 41, and thus it is estimated that at least the pilot valve 103 is normally opened, the CPU 66 makes a request of generating a fuel injection valve driving signal for the fuel injection valve driving circuit 62 to activate the gaseous fuel injection valve 23 (step S5). In addition, the downstream pressure actual measurement value P1 after the activation of the gaseous fuel injection valve 23 is acquired from the A/D converter 61 (step S6).

In addition, the CPU 66 determines whether or not the acquired downstream pressure actual measurement value P1 is less than or equal to the threshold value Pt (step S7). Here, in the case of "No", the process returns to step S6 and the acquisition of the downstream pressure actual measurement value P1 is continued. On the other hand, in the case of "Yes", that is, in a case where it is estimated that the main valve 104 enters the shut valve state (in the case of the pattern b in FIG. 4(b)), the CPU 66 determines that the shut-off valve 41 is in a fault state and terminates the shut-off valve fault diagnosis process (step S8).

On the other hand, in the case of "No" in step S4, that is, in a case where the downstream pressure actual measurement value P1 does not exceed the threshold value Pt after the predetermined time T has passed from the initiation of the power supply to the shut-off valve 41, and thus it is estimated that both of the pilot valve 103 and the main valve 104 enter the shut valve state (in the case of the patterns c and d of FIG. 4(b)), the process transitions to step S8, and the CPU 66 determines that the shut-off valve 41 is in a fault state and terminates the shut-off valve fault diagnosis process.

Furthermore, in the case of "No" in step S1, that is, in the case of the second case shown in FIG. 5, the CPU 66 makes a request of generating the shut-off valve driving signal for the shut-off valve driving circuit 63 to initiate the power supply of the shut-off valve 41 (step S9). In addition, after the initiation of the power supply to the shut-off valve 41, the CPU 66 makes a request of generating the fuel injection valve driving signal for the fuel injection valve driving circuit 62 to activate the gaseous fuel injection valve 23 (step S10). In addition, the downstream pressure actual measurement value P1 after the activation of the gaseous fuel injection valve 23 is acquired from the A/D converter 61 (step S11).

In addition, the CPU 66 determines whether or not the acquired downstream pressure actual measurement value P1 is less than or equal to the threshold value Pt (step S12). Here, in the case of "No", the process returns to step S11 and the acquisition of the downstream pressure actual measurement value P1 is continued. On the other hand, in the case of "Yes", that is, in a case where it is estimated that at least the main valve 104 enters the shut valve state (the case of the patterns f and h of FIG. 5(b)), the process transitions to step S8, and the CPU 66 determines that the shut-off valve 41 is in a fault state and terminates the shut-off valve fault diagnosis process.

As described above, according to this embodiment, the fault diagnosis of the shut-off valve 41 having the kick pilot structure may be appropriately performed. In addition, when the fault diagnosis of the shut-off valve 41 is performed using a process sequence that is different in each of the first case (case in which the differential pressure between upstream and downstream of the shut-off valve 41 is large) and the second case (case in which the differential pressure between upstream and downstream of the shut-off valve 41 is small), appropriate fault diagnosis in correspondence with each of the cases may be performed.

In addition, the present invention is not limited to the above-described embodiment, and the following modifications may be made.
(1) In the above-described embodiment, the bi-fuel engine system, which includes the 1^{st}-ECU 5 that carries out an operation control by the liquid fuel and the 2^{nd}-ECU 6 that carries out an operation control by the gaseous fuel and fault diagnosis of the shut-off valve 41, separately, is given as an example, but a configuration in which the functions of the two ECUs are integrated in one ECU may be adopted.
(2) In the above-described embodiment, description was made with respect to the bi-fuel engine system as an example, but the present invention is not limited thereto, and the present invention is applicable to a mono fuel engine system that supplies only the gaseous fuel to a single engine.
(3) The kick pilot structure of the shut-off valve 41 shown in FIG. 7 is illustrative only, and the present invention is applicable to a shut-off valve as a fault diagnosis technology thereof as long as the shut-off valve includes a first valve body that is opened in advance during power supply and a second valve body that is opened due to a decrease in the differential pressure between upstream and downstream after the first valve body is opened.
(4) In the above-described embodiment, a description was made with respect to a case in which the downstream pressure (that is, a pressure of a fuel supply path ranging from the regulator 42 to the gaseous fuel injection valve 23) of the regulator 42 is measured as the downstream pressure of the shut-off valve 41, but as the downstream pressure of the shut-off valve 41, a pressure in a fuel supply path ranging from the shut-off valve 41 to the regulator 42 may be measured. In addition, in the case of serving both as a pressure sensor and a temperature sensor, it is preferable that a place at which the downstream pressure of the shut-off valve 41 is measured be as close as possible to the gaseous fuel injection valve 23. This is because the accuracy of the temperature measurement is improved.

### Industrial Applicability

According to the shut-off valve fault diagnosis device of the present invention, the fault diagnosis of the shut-off valve having a kick pilot structure may be appropriately performed.

### Reference Signs List

1: Engine
2: Liquid fuel supply unit
3: Gaseous fuel supply unit
4: Fuel-switching switch
5: 1^{st}-ECU (Electronic Control Unit)
6: 2^{nd}-ECU (shut-off valve fault diagnosis device)
23: Gaseous fuel injection valve
41: Shut-off valve
66: CPU (diagnosis processing unit)
103: Pilot valve (first valve body)
104: Main valve (second valve body)

## Claims

1. A shut-off valve fault diagnosis device comprising:
a shut-off valve(41) including a first valve body (103) that is opened in advance during power supply and a second valve body (104) that is opened due to a decrease in a differential pressure between upstream and downstream after the first valve body (103) is opened; and
a diagnosis processing unit (66) that estimates an open and shut state of each of the first and second valve bodies (103, 104) from relationship between a time-variable characteristic in an actual measurement value of a downstream pressure of the shut-off valve (41) and a predetermined threshold value, and performs the fault diagnosis of the shut-off valve (41) based on the estimation result,
wherein in a case where the actual measurement value of the downstream pressure before the power supply to the shut-off valve (41) is less than or equal to the threshold value, the diagnosis processing unit (66) determines whether or not the actual measurement value of the downstream pressure exceeds the threshold value after a predetermined time has passed from initiation of the power supply to the shut-off valve (41), and in a case where it is determined that the actual measurement value does not exceed the threshold value, the diagnosis processing unit (66) estimates that at least the first valve body is in a shut valve state and determines that the shut-off valve is in a fault state, and
wherein in a case where it is determined that the actual measurement value of the downstream pressure exceeds the threshold value after a predetermined time has passed from the initiation of the power supply to the shut-off valve, the diagnosis processing unit activates a fuel injection valve provided downstream of the shut-off valve, and in a case where the actual measurement value of the downstream pressure becomes less than or equal to the threshold value after the activation of the fuel injection valve, the diagnosis processing unit (66) estimates that the first valve body is in an open valve state and the second valve body is in a shut valve state and determines that the shut-off valve is in a fault state,
and/or
wherein in a case where the actual measurement value of the downstream pressure exceeds the threshold value before the power supply to the shut-off valve (41),, the diagnosis processing unit activates a fuel injection valve provided downstream of the shut-off valve (41) after the initiation of the power supply to the shut-off valve, and in a case where the actual measurement value of the downstream pressure is less than or equal to the threshold value after the activation of the fuel injection valve, the diagnosis processing unit (66) estimates that at least the second valve body is in a shut valve state and determines that the shut-off valve is in a fault state.

2. The shut-off valve fault diagnosis device according to claim 1, wherein the predetermined time is set to a time until the downstream pressure becomes a value at which an engine is operable after the first valve body is opened from the initiation of the power supply to the shut-off valve (41).

## Patentansprüche

1. Vorrichtung zur Fehlerdiagnose bei einem Absperrventil, umfassend:
ein Absperrventil (41), umfassend einen ersten Ventilkörper (103), der zuvor während einer Energieversorgung geöffnet wird, und einen zweiten Ventilkörper (104), der aufgrund einer Abnahme eines Differenzdrucks zwischen stromaufwärts und stromabwärts geöffnet wird, nachdem der erste Ventilkörper (103) geöffnet ist; und
eine Diagnoseprozesseinheit (66), die einen offenen und geschlossenen Zustand von jedem von dem ersten und zweiten Ventilkörper (103, 104) abschätzt von einem Zusammenhang zwischen einer zeitlich variablen Charakteristik eines momentanen Messwerts eines stromabwärtigen Drucks des Absperrventils (41) und einem vorbestimmten Schwellenwert, und die Fehlerdiagnose des Absperrventils (41) basierend auf dem Abschätzergebnis durchführt,
wobei in einem Fall, wo der momentane Messwert des stromabwärtigen Drucks vor der Energieversorgung des Absperrventils (41) kleiner oder gleich dem Schwellenwert ist, die Diagnoseprozesseinheit (66) bestimmt, ob oder ob nicht der momentane Messwert des stromabwärtigen Drucks den Schwellenwert übersteigt, nachdem eine vorbestimmte Zeit von dem Beginn der Energieversorgung des Absperrventils (41) verstrichen ist, und in einem Fall, wo bestimmt wird, dass der momentane Messwert den Schwellenwert nicht übersteigt, die Diagnoseprozesseinheit (66) abschätzt, dass wenigstens der erste Ventilkörper in einem geschlossenen Ventilzustand ist, und bestimmt, dass das Absperrventil in einem Fehlerzustand ist, und
wobei in einem Fall, wo bestimmt wird, dass der momentane Messwert des stromabwärtigen Drucks den Schwellenwert übersteigt, nachdem eine vorbestimmte Zeit seit dem Beginn der Energieversorgung des Absperrventils verstrichen ist, die Diagnoseprozesseinheit ein Kraftstoffeinspritzventil aktiviert, das stromabwärts des Absperrventils vorgesehen ist, und in einem Fall, wo der momentane Messwert des stromabwärtigen Drucks kleiner oder gleich dem Schwellenwert nach der Aktivierung des Kraftstoffeinspritzventils wird, die Diagnoseprozesseinheit (66) abschätzt, dass der erste Ventilköper in einem geöffneten Ventilzustand ist, und der zweite Ventilkörper in einem geschlossenen Ventilzustand ist, und bestimmt, dass das Absperrventil in einem Fehlerzustand ist,
und/oder
wobei in einem Fall, wo der momentane Messwert des stromabwärtigen Drucks den Schwellenwert vor der Energieversorgung des Absperrventils (41) übersteigt, die Diagnoseprozesseinheit ein Kraftstoffeinspritzventil aktiviert, das stromabwärts des Absperrventils (41) vorgesehen ist, nach dem Beginn der Energieversorgung des Absperrventils, und in einem Fall, wo der momentane Messwert des stromabwärtigen Drucks kleiner oder gleich dem Schwellenwert nach der Aktivierung des Kraftstoffeinspritzventils ist, die Diagnoseprozesseinheit (66) abschätzt, dass wenigstens der zweite Ventilkörper in einem geschlossenen Ventilzustand ist, und bestimmt, dass das Absperrventil in einem Fehlerzustand ist.

2. Vorrichtung zur Fehlerdiagnose bei einem Absperrventil nach Anspruch 1, wobei die vorbestimmte Zeit auf eine Zeit eingestellt ist, bis der stromabwärtige Druck ein Wert wird, bei dem eine Brennkraftmaschine betreibbar ist, nachdem der erste Ventilkörper geöffnet ist ab dem Beginn der Energieversorgung des Absperrventils (41).

## Revendications

1. Dispositif de diagnostic de défaillance de soupape d'arrêt comprenant :
une soupape d'arrêt (41) comportant un premier corps de soupape (103) qui est ouvert à l'avance pendant une alimentation en puissance et un second corps de soupape (104) qui est ouvert en raison d'une diminution de pression différentielle entre l'amont et l'aval après ouverture du premier corps de soupape (103) ; et
une unité de traitement de diagnostic (66) qui estime un état ouvert et fermé de chacun des premier et second corps de soupape (103, 104) à partir d'une relation entre une caractéristique variable dans le temps d'une valeur de mesure réelle d'une pression en aval de la soupape d'arrêt (41) et une valeur seuil prédéterminée, et réalise le diagnostic de défaillance de la soupape d'arrêt (41) d'après le résultat d'estimation,
dans lequel, dans un cas où la valeur de mesure réelle de la pression en aval avant l'alimentation en puissance de la soupape d'arrêt (41) est inférieure ou égale à la valeur seuil, l'unité de traitement de diagnostic (66) détermine si la valeur de mesure réelle de la pression en aval dépasse ou non la valeur seuil après écoulement d'un temps prédéterminé depuis le déclenchement de l'alimentation en puissance de la soupape d'arrêt (41), et dans un cas où il est déterminé que la valeur de mesure réelle ne dépasse pas la valeur seuil, l'unité de traitement de diagnostic (66) estime qu'au moins le premier corps de soupape est dans un état de soupape fermée et détermine que la soupape d'arrêt est dans un état de défaillance, et
dans lequel, dans un cas où il est déterminé que la valeur de mesure réelle de la pression en aval dépasse la valeur seuil après écoulement d'un temps prédéterminé depuis le déclenchement de l'alimentation en puissance de la soupape d'arrêt, l'unité de traitement de diagnostic active une soupape d'injection de carburant prévue en aval de la soupape d'arrêt, et dans un cas où la valeur de mesure réelle de la pression en aval devient inférieure ou égale à la valeur seuil après l'activation de la soupape d'injection de carburant, l'unité de traitement de diagnostic (66) estime que le premier corps de soupape est dans un état de soupape ouverte et le second corps de soupape est dans un état de soupape fermée et détermine que la soupape d'arrêt est dans un état de défaillance,
et/ou
dans lequel, dans un cas où la valeur de mesure réelle de la pression en aval dépasse la valeur seuil avant l'alimentation en puissance de la soupape d'arrêt (41), l'unité de traitement de diagnostic active une soupape d'injection de carburant prévue en aval de la soupape d'arrêt (41) après le déclenchement de l'alimentation en puissance de la soupape d'arrêt, et dans un cas où la valeur de mesure réelle de la pression en aval est inférieure ou égale à la valeur seuil après l'activation de la soupape d'injection de carburant, l'unité de traitement de diagnostic (66) estime qu'au moins le second corps de soupape est dans un état de soupape fermée et détermine que la soupape d'arrêt est dans un état de défaillance.

2. Dispositif de diagnostic de défaillance de soupape d'arrêt selon la revendication 1, dans lequel le temps prédéterminé est réglé à un temps jusqu'à ce que la pression en aval devienne une valeur à laquelle un moteur est opérationnel après ouverture du premier corps de soupape depuis le déclenchement de l'alimentation en puissance de la soupape d'arrêt (41).
